Europäisches Patentamt

European Patent Office

Office européen des brevets

(19)

(11) Veröffentlichungsnummer: **0 142 056**
**B1**

(12) **EUROPÄISCHE PATENTSCHRIFT**

(45) Veröffentlichungstag der Patentschrift:
22.03.89

(21) Anmeldenummer: 84112456.3

(22) Anmeldetag: 16.10.84

(51) Int. Cl.⁴: **G 01 S 7/42, G 01 S 13/24,
G 01 S 13/87**

(54) Radaranordnung für Luftfahrzeuge.

(30) Priorität: **17.10.83 DE 3337649**

(43) Veröffentlichungstag der Anmeldung:
**22.05.85 Patentblatt 85/21**

(45) Bekanntmachung des Hinweises auf die Patenterteilung:
**22.03.89 Patentblatt 89/12**

(84) Benannte Vertragsstaaten:
**DE FR GB IT**

(56) Entgegenhaltungen:
**GB-A- 802 373
GB-A- 999 560
US-A- 3 889 261
US-A- 4 121 212**

**PATENTS ABSTRACTS OF JAPAN, Band 2, Nr. 27, 21
Februar 1978, Seite 12030 E 77 & JP A 52 149 085**

(73) Patentinhaber: **Licentia Patent-Verwaltungs-GmbH,
Theodor-Stern-Kai 1, D-6000 Frankfurt/Main 70 (DE)**

(72) Erfinder: **Jehle, Franz, Dipl.-Ing. (FH),
Fünf-Bäume-Weg 148, D-7900 Ulm (DE)**
Erfinder: **Meinel, Holger, Dipl.-Ing., Ulrichstrasse 1,
D-7900 Ulm (DE)**

(74) Vertreter: **Schulze, Harald Rudolf, Dipl.-Ing. et al,
Licentia Patent-Verwaltungs-GmbH
Theodor-Stern-Kai 1, D-6000 Frankfurt/Main 70 (DE)**

**Beschreibung**

Die Erfindung betrifft eine Radaranordnung der im Oberbegriff des Patentanspruchs 1 angegebenen Art.

Aus der GB-A-999 560 ist eine Radaranordnung zum Betrieb auf zwei unterschiedlichen Frequenzen bekannt. Die Sende- und die Empfangseinrichtungen dieser bekannten Anordnung sind über einen Sende-/Empfangsumschalter an eine gemeinsame Antenne anschließbar und weisen jeweils zwei Kanäle mit entsprechenden frequenzselektiven Mitteln auf. Aus den in getrennten Empfangskanälen aufgearbeiteten Echosignalen der ersten und der zweiten Frequenz werden ein Summensignal und ein Differenzsignal gebildet. Durch weiteres Kombinieren des Summensignals und des Differenzsignals wird ein Ausgangssignal gewonnen, das frei ist von Interferenzstörungen, die nur bei einer der beiden Frequenzen auftreten.

Radaranordnungen für Luftfahrzeuge sind im allgemeinen Beschränkungen hinsichtlich Gewicht und Raumbedarf unterworfen. Während bei üblichen Radars eine Unterdrückung von Festzielechos durch MTI oder ähnliche Maßnahmen vorgenommen wird, ist bei tiefffliegenden Luftfahrzeugen neben der Entdeckung von Bewegtzielen auch die Erkennung von Hindernissen, wie z.B. Bäumen, Masten oder Hochspannungsleitungen wesentlich, um Kollisionen mit derartigen Hindernissen zu vermeiden.

Der vorliegenden Erfindung liegt die Aufgabe zugrunde, eine Radaranordnung der im Oberbegriff des Patentanspruchs 1 genannten Art anzugeben, die diese vorstehend genannten Anforderungen erfüllt. Die Erfindung ist im Patentanspruch 1 beschrieben. Die Unteransprüche beinhalten vorteilhafte Ausgestaltungen und Weiterbildungen der Erfindung.

Durch die Erfindung ist die Warnung vor Hindernissen durch den Betrieb der Anordnung auf der ersten Frequenz und die Erkennung von Bewegtzielen und Navigation durch Betrieb auf der zweiten Frequenz in einem Gerät möglich, was gegenüber zwei getrennten Geräten eine erhebliche Aufwandsverringerung und Gewichts- und Raumersparnis bedeutet. Dadurch, daß beide Frequenzen nahe beieinander liegen, können dieselben Hohlleiter, Antenne und andere Bauteile für beide Frequenzen gemeinsam eingesetzt werden. Für die Bewegtzielerkennung und Navigation sind große Reichweiten erwünscht, so daß die hierfür vorgesehene Frequenz in einen Bereich geringer atmosphärischer Dämpfung gelegt ist. Für die Hinderniswarnung ist im wesentlichen das Manövriervolumen innerhalb einer bestimmten Reaktionszeit, i.a. geschwindigkeitsabhängig zu erfassen, wofür keine so großen Reichweiten gefordert sind. Zur Vermeidung unnötiger Störungen in anderen HF-Anlagen soll die über das Überwachungsvolumen des Hinderniswarnradars hinausreichende Strahlung möglichst gering sein, so daß für diese Betriebsart eine hohe atmosphärische Dämpfung von Vorteil ist.

Die Erfindung erfüllt beide Erfordernisse auf vorteilhafte Weise, indem die Hinderniswarnung mittels der auf ein Maximum der atmosphärischen Dämpfung gelegten zweiten Frequenz und die Bewegtzielerkennung und Navigation mittels der an eine Flanke dieses Maximums gelegten zweiten Frequenz durchgeführt ist. Die zweite Frequenz liegt günstigerweise unterhalb der ersten Frequenz an der steiler und tiefer abfallenden niederfrequenten Flanke des Dämpfungsmaximums.

Im Empfangszweig der Anordnung werden die zu verschiedenen Sendefrequenzen gehörigen Echosignale durch frequenzselektive Mittel getrennt und einem von zwei Empfangskanälen entweder zur Hinderniserkennung oder zur Bewegtzielauswertung und Navigation zugeführt.

Die Erfindung findet besonders vorteilhaft Anwendung in Hubschraubern, die durch ihre geringe Flughöhe durch Hindernisse besonders gefährdet sind. Die Hinderniswarnung und die Bewegtzielerkennung können dabei ständig abwechselnd durchgeführt werden. Eine andere vorteilhafte Betriebsweise sieht vor, daß Hinderniswarnung und Bewegtzielerkennung im wesentlichen zu verschiedenen Zeitpunkten durchgeführt werden und berücksichtigt dabei, daß größtenteils ein vorgegebenes Gebiet auf Bewegtziele überwacht werden soll, ohne daß der Hubschrauber noch weitreichende Flugmanöver ausführt, daß andererseits beim Anflug auf dieses Gebiet nur die Hinderniswarnung als Betriebsart erforderlich ist.

Die Erfindung ist nachfolgend anhand eines bevorzugten Ausführungsbeispiels unter Bezugnahme auf die Abbildungen noch veranschaulicht. Dabei zeigt

Fig. 1 den prinzipiellen Frequenzverlauf der atmosphärischen Dämpfung mit den bevorzugten Frequenzlagen

Fig. 2 eine vorteilhafte Anordnung nach der Erfindung.

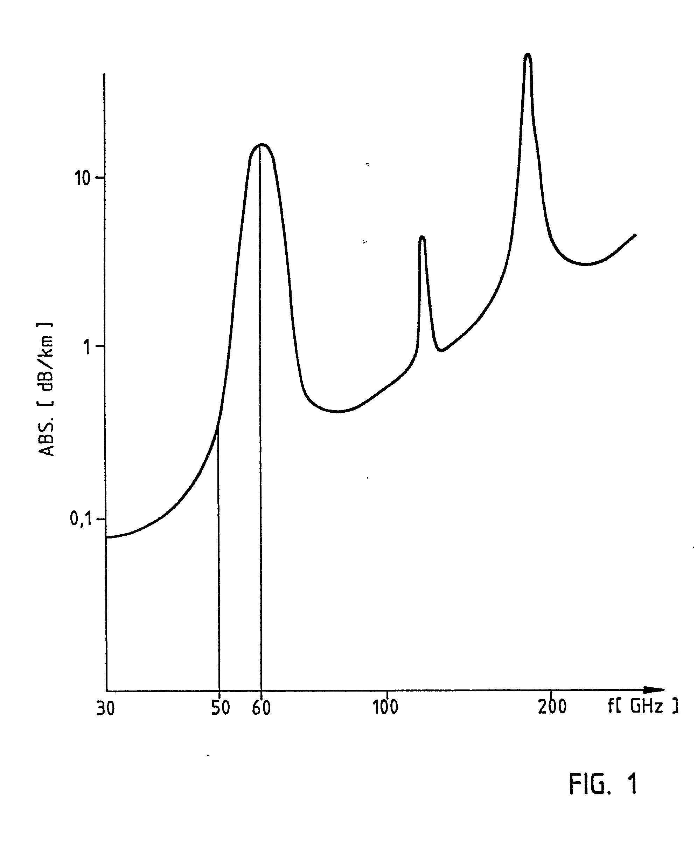

Aus dem in Fig. 1 skizzierten Verlauf der Absorption von Millimeterwellen in der Atmosphäre ergibt sich die Lage der ersten Frequenz $f_1$ bei dem Maximum bei 60 GHz und der zweiten Frequenz $f_2$ bei 50 GHz. Für die Werte der Absorption ergibt sich trotz des geringen Frequenzabstands ein Unterschied von mehr als 15 dB/km.

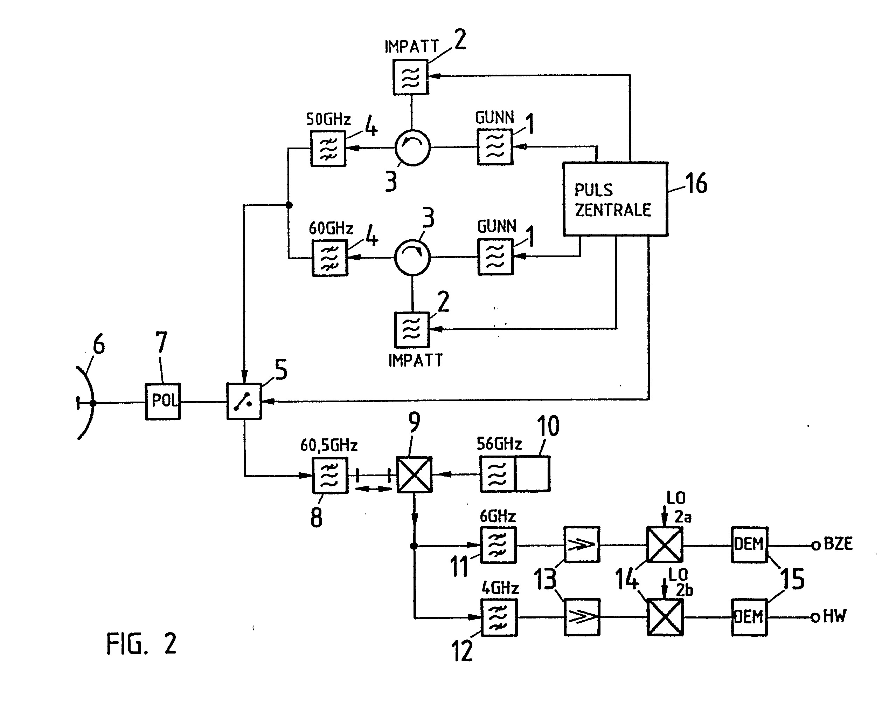

Bei der in der Fig. 2 gezeigten Anordnung sind vorteilhafterweise nur die mm-Wellen-Komponenten des Sendezugs doppelt auszuführen.

Für 50 GHz und für 60 GHz ist jeweils ein gepulster Gunn-Oszillator 1 vorhanden, der einen entsprechenden Impatt-Leistungsoszillator 2 synchronisiert. Die Ausgangsleistung wird jeweils über einen mit Hohlleiterfiltern 4 aufgebauten Duplexer 3 dem Sende-/Empfangsumschalter 5 und über diesen der Antenne 6 zugeführt.

Der zwischen Antenne 6 und Sende-/Empfangsumschalter 5 eingefügte Polarisator 7 ist für die Sendefrequenz von 50 GHz ausgelegt und bewirkt bei dieser Frequenz einen Laufzeitunterschied von $\frac{3}{4}\lambda$. Bei 50 Hz wird also nur die dem Sendesignal parallel-zirkulare Komponente des Echosignals durchgelassen. Da die Echos von natürlichen Zielen i.a. auf einfacher Reflexion beruhen, werden solche natürlichen Ziele bei 50 GHz ausgeblendet, während Ziele, wie z.B. Landfahrzeuge, eine Mehrfachreflexion des Radarsignals in Ecken zeigen und die Echos den Polarisator passieren. Da die Dreiviertelwellenlänge bei 50 GHz annähernd einer ganzen Wellenlänge bei 60 GHz entspricht, ist der Einfluß des Polarisators für die erste Frequenz vernachlässigbar, so daß die Erkennung von Hindernissen dadurch nicht beeinträchtigt ist.

Die Steuerung der Oszillatoren und des Umschalters erfolgt durch eine Pulszentrale.

Der Empfangszweig enthält einen Gegentaktmischer 9 mit einem vorgeschalteten Tiefpaßfilter 8 mit einer Grenzfrequenz $f_G$ = 60,5 GHz sowie einen passiv stabilisierten Mischeroszillator 10 mit einer Oszillatorfrequenz $f_0$ = 56 GHz. Dieser Aufbau ermöglicht es, den Konversionsverlust bei 50 GHz durch Spiegelfrequenzrückmischung zu erniedrigen.

Das 50 GHz-Signal für die Bewegtzielerkennung wird auf eine Zwischenfrequenz $f_3$ = 6 GHz und das 60 GHz-Signal für die Hinderniswarnung auf eine Zwischenfrequenz von $f_4$ = 4 GHz umgesetzt.

Durch Bandpaßfilter 11 und 12 werden die frequenzumgesetzten Signale jeweils einem von zwei Empfangskanälen mit Einrichtungen 13, 14, 15 zur Verstärkung, weiterer Abwärtsmischung, Demodulation und Auswertung zugeführt.

## Patentansprüche

1. Radaranordnung für tieffliegende Luftfahrzeuge mit einer Sende-/Empfangsantenne (6), die über einen Sende-/Empfangsumschalter (5) abwechselnd an Sende- bzw. Empfangseinrichtungen anschließbar ist, wobei die Sendeeinrichtungen zur Erzeugung von Sendesignalen einer ersten und einer zweiten Frequenz ($f_1$, $f_2$) zwei gemeinsam über den Sende-/Empfangsumschalter (5) mit der Antenne (6) verbundene Sendekanäle und die Empfangseinrichtungen zwei Empfangskanäle mit frequenzselektiven Einrichtungen für die erste und die zweite Frequenz ($f_1$, $f_2$) enthalten, dadurch gekennzeichnet, daß die erste Frequenz ($f_1$) im Bereich eines Maximums atmosphärischer Dämpfung und die zweite Frequenz ($f_2$) in der Nähe der ersten Frequenz in einem Bereich geringer atmosphärischer Dämpfung liegt, und daß der Empfangskanal für die erste Frequenz ausgangsseitig an Einrichtungen zur Hinderniswarnung (HW) und der Empfangskanal für die zweite Frequenz an Einrichtungen zur Bewegtzielerkennung und Navigation (BZE) angeschlossen ist.

2. Anordnung nach Anspruch 1, dadurch gekennzeichnet, daß die erste Frequenz ($f_1$) bei dem atmosphärischen Dämpfungsmaximum bei 60 GHz und die zweite Frequenz ($f_2$) bei etwa 50 GHz liegt.

3. Anordnung nach Anspruch 1 oder 2, dadurch gekennzeichnet, daß der Empfangszweig für beide Frequenzen ($f_1$, $f_2$) gemeinsam einen Mischeroszillator (10) und einen breitbandigen Mischer (9) enthält, wobei die Frequenz ($f_0$) des Mischeroszillators (10) so liegt, dass sich je nach Sendefrequenz bei der Mischung unterschiedliche Zwischenfrequenzen ($f_3$, $f_4$) ergeben, und daß die frequenzselektiven Mittel (11, 12) nach dem Mischer angeordnet sind.

4. Anordnung nach Anspruch 3, dadurch gekennzeichnet, daß der Mischer (9) ein Gegentaktmischer ist, und daß dem Mischer zur Spiegelfrequenzrückmischung bei der zweiten Sendefrequenz ($f_2$) ein Filter vorgeschaltet ist.

5. Anordnung nach Anspruch 3 oder 4, dadurch gekennzeichnet, daß der Mischer (9) in Finleitungstechnik ausgeführt ist.

6. Anordung nach einem der Ansprüche 1 bis 5, dadurch gekennzeichnet, daß zwischen Antenne (6) und Sende-/Empfangsumschalter (5) ein Zirkularpolarisator (7) angeordnet ist, der für die zweite Sendefrequenz ($f_2$) dimensioniert ist.

7. Anordnung nach Anspruch 2 und Anspruch 6, dadurch gekennzeichnet, daß der Polarisator (7) für 50 GHz ein $\frac{3}{4}$ $\lambda$-Polarisator ist.

8. Anordnung nach einem der Ansprüche 1 bis 7, dadurch gekennzeichnet, daß der Sende-/Empfangsumschalter ein Breitbandzirkulator ist.

9. Anordnung nach einem der Ansprüche 1 bis 7, dadurch gekennzeichnet, daß der Sende-/Empfangsumschalter ein Filter-Diplexer ist.

10. Anordnung nach einem der Ansprüche 1 bis 7, dadurch gekennzeichnet, daß der Sende-/Empfangsumschalter (5) ein PIN-Dioden-Schalter ist.

11. Anordnung nach Anspruch 10, dadurch gekennzeichnet, daß die Steuerung des PIN-Dioden-Schalters (5) in der Empfangsphase die zeitabhängige Dämpfung (STC) des Radarempfängers einschließt.

12. Anordnung nach einem der Ansprüche 1 bis 11, gekennzeichnet durch ihre Verwendung in einem Hubschrauber.

## Claims

1. Radar arrangement for low-flying aircraft with a transmitting and receiving aerial (6), which is connectable by way of a transmission and reception change-over switch (5) alternately to transmission and reception equipments, wherein the transmission equipments contain two transmission channels, which are together connected by way of the transmission and reception change-over switch (5) with the aerial (6), for the generation of transmission signals of a first and a second frequency ($f_1$, $f_2$) and the reception equipments contain two reception channels with frequency-selective equipments for the first and the second frequency ($f_1$, $f_2$), characterised thereby, that the first frequency ($f_1$) lies in the range of a maximum of atmospheric attenuation and the second frequency ($f_2$) lies in the proximity of the first frequency ($f_1$) and in a range of low atmospheric attenuation and that the reception channel for the first frequency ($f_1$) is connected at the output side to equipments for obstacle warning (HW) and the reception channel for the second frequency ($f_2$) is connected to equipments for navigation (BZE) and for the recognition of moving targets.

2. Arrangement according to claim 1, characterised thereby, that the first frequency ($f_1$) at the maximum of atmospheric atenuation lies at 60 gigahertz and the second fequency ($f_2$) at about 50 gigahertz.

3. Arrangement according to claim 1 or 2, characterised thereby, that the reception branch for both frequencies ($f_1$, $f_2$) together contains a mixer oscillator (10) and a wide-band mixer (9), wherein the frequency ($f_0$) of the mixer oscillator (10) is such that different intermediate frequencies ($f_3$, $f_4$) result according to transmission frequency during the mixing and that the frequency-selective means (11, 12) are arranged behind the mixer.

4. Arrangement according to claim 3, characterised thereby, that the mixer (9) is a push-pull mixer and that a filter is connected in front of the mixer for image frequency remodulation at the second transmission frequency ($f_2$).

5. Arrangement according to claim 3 or 4, characterised thereby, that the mixer (9) is constructed in fin line technique.

6. Arrangement according to one of the claims 1 to 5, characterised thereby, that a circular polariser (7), which is dimensioned for the second transmission frequency ($f_2$), is arranged between aerial (6) and transmission and reception change-over switch (5).

7. Arrangement according to claim 2 and claim 6, characterised thereby, that the polariser (7) for 50 gigahertz is a $\frac{3}{4} \lambda$ polariser.

8. Arrangement according to one of the claims 1 to 7, characterised thereby, that the transmission and reception change-over switch is a wide-band circulator.

9. Arrangement according to one of the claims 1 to 7, characterised thereby, that the transmission and reception change-over switch is a filter diplexer.

10. Arrangement according to one of the claims 1 to 7, characterised thereby, that the transmission and reception change-over switch (5) is a PIN-diode switch.

11. Arrangement according to claim 10, characterised thereby, that the control of the PIN-diode switch (5) in the reception phase includes the time-dependent atenuation (STC) of the radar receiver.

12. Arrangement according to one of the claims 1 to 11, characterised by its use in a helicopter.

**Revendications**

1. Dispositif radar pour aéronefs volant bas avec une antenne d'émission-réception (6) pouvant être raccordée tour à tour, par l'intermédiaire d'un interrupteur d'émission-réception (5), à des installations d'émission et de réception, sur lequel les installations d'émission comportent pour la génération de signaux d'émission sur une première et sur une deuxième fréquence ($f_1$, $f_2$) deux canaux d'émission reliés conjointement à l'antenne (6) par l'intermédiaire de l'interrupteur d'émission-réception (5), et les installations de réception deux canaux de réception avec des installations de sélection de fréquence pour la première et la deuxième fréquence ($f_1$, $f_2$), caractérisé en ce que la première fréquence ($f_1$) se situe dans la région d'un maximum d'affaiblissement atmosphérique et la deuxième fréquence ($f_2$) à proximité de la première fréquence dans un domaine de faible affaiblissement atmosphérique et en ce que le canal de réception pour la première fréquence est relié du côté sortie à des installations d'avertissement de présence d'obstacles (HW) et le canal de réception pour la deuxième fréquence à des installations de reconnaissance d'objectifs mobiles et de navigation (BZE).

2. Dispositif selon la revendication 1, caractérisé en ce que la première fréquence ($f_1$) se situe au maximum d'affaiblissement atmosphérique, soit à 60 GHz et la deuxième fréquence ($f_2$) à environ 50 GHz.

3. Dispositif selon la revendication 1 ou 2, caractérisé en ce que le branchement de réception pour les deux fréquences ($f_1$, $f_2$) contient en même temps un oscillateur mélangeur (10) et un oscillateur à large bande (9), la fréquence ($f_0$) de l'oscillateur mélangeur (10) se situant de manière telle que le mixage donne lieu selon la fréquence d'émission à différentes fréquences intermédiaires ($f_3$, $f_4$) et que les moyens (11, 12) de sélection de fréquence sont disposés après le mélangeur.

4. Dispostif selon la revendication 3, caractérisé en ce que le mélangeur (9) est un mélangeur à montage push-pull et en ce qu'un filtre est monté en amont pour le rétro mélange de fréquence-image avec la deuxième fréquence d'émission ($f_2$).

5. Dispostif selon la revendication 3 ou 4, caractérisé en ce que le mélangeur (9) est exécuté selon la technique d'introduction.

6. Dispositif selon l'une des revendications 1 à 5, caractérisè en ce qu'il est disposé entre l'antenne (6) et le commutateur d'émission-réception (5) un polarisateur circulaire (7) qui est dimensionné pour la deuxième fréquence d'émission ($f_2$).

7. Dispositif selon la revendication 2 et la revendication 6, caractérisé en ce que le polarisateur (7) pour 50 GHz est un polarisateur $\frac{3}{4} \lambda$.

8. Dispositif selon l'une des revendications 1 à 7, caractérisé en ce que le commutateur d'émission-réception est un circulateur à large bande.

9. Dispositif selon l'une des revendications 1 à 7, caractérisé en ce que le commutateur d'émission-réception est un duplexeur à filtre.

10. Dispositif selon l'une des revendications 1 à 7, caractérisé en ce que le commutateur d'émission-réception est un interrupteur à diodes PIN.

11. Dispositif selon la revendication 10, caractérisé en ce que la commande de l'interrupteur à diodes PIN (5) inclut dans la phase de réception l'affaiblissement en fonction du temps du récepteur radar (STC).

12. Dispositif selon l'une des revendications 1 à 11, caractérisé par son utilisation sur un hélicoptère.

FIG. 1

FIG. 2

EP 0 142 056 B1